# EUROPEAN PATENT APPLICATION

(11) **EP 4 821 772 A1**
(43) Date of publication of application: **14.10.2026**
(21) Application number: 26164591.5
(22) Date of filing: 13.03.2026
(51) Int. Cl.: B60S 1/52, B05B 7/08, B60S 1/54, G02B 27/00, B60S 1/56

(54) **CLEANING DEVICE**

(30) Priority: 09.04.2025 FR 2503770
(71) Applicant: A. Raymond et Cie, 38000 Grenoble (FR)
(72) Inventor: BODE, Karl, 79540 LÖRRACH (DE); SCHREIYÄCK, Daniel, 79576 WEIL AM RHEIN (DE); REGENSBURGER, Jan, 79400 KANDERN (DE); MENTE, Niklas, 79541 LÖRRACH (DE)
(74) Representative: IP Trust

(57) **Abstract**

The invention concerns a cleaning device (10) configured to dispense two fluids said respectively, first fluid and second fluid, the cleaning device (10) comprising, alternatively disposed along a main direction of a face said spraying face, series of first outlets (310) and seconds outlets (320), each series of first outlets (310) comprising first outlets (311), advantageously aligned along the main direction, the first outlets of a series of first outlets (310) comprising main first outlets configured to spray the first fluid along a spraying direction perpendicular to the main direction and two lateral first outlets configured to spray the first fluid along, respectively, a first lateral direction and a second lateral direction, diverging from each other in a plane formed by the spraying direction and the main direction.

## Description

### FIELD OF THE INVENTION

The present invention concerns a cleaning device for cleaning a surface of an exposed surface of a sensor.

Notably, the present invention aims at proposing a cleaning device configured for cleaning and drying large surfaces with reduced fluid consumption.

### DESCRIPTION OF THE RELATED ART

Automotive vehicles are now equipped with many sensors, cameras, lidars or radars (hereinafter referred to as "sensors") for driving assistance purposes. These sensors may be located inside or outside the vehicle in order to offer the driver a complete visibility of the environment in which the vehicle is located. For example, sensors may be located in the bumper, in the side-skirt, on the side mirror, behind the windshield, under the hood, nearby the headlamps, on a roof pod.

However, these sensors, when exposed to the environment, are likely to be covered with dirt or dust, and consequently may encounter performance degradations. Frequent cleaning and drying of these sensors is therefore required to guarantee their performances.

In this respect, automotive vehicles may be provided with a cleaning system equipped in particular with cleaning fluid distribution ducts and nozzles. The nozzles are notably arranged at the ends of the fluid distribution ducts and in close proximity of the sensors. According to this arrangement, it is possible to dispense a cleaning fluid on the surface of each of the sensors and thus remove traces of dust or dirt.

To this regard, a fluid distribution system known from the prior art is disclosed in document WO 2023/036383. However, the fluid distribution system disclosed in this document is not satisfactory. In fact, the liquid and gas outlets are not properly arranged to optimize the cleaning and the drying of broad surfaces and the liquid consumption. Furthermore, the system proposed in this document is not compact enough.

One purpose of the present invention is to propose a cleaning device which allows an optimized cleaning and drying of large surfaces and reduced liquid consumption with respect the cleaning devices known from prior art.

Another purpose of the present invention is to also to propose a cleaning device for which the cleaning efficiency is improved with respect to the cleaning devices known from prior art.

Another purpose of the present invention is also to propose a cleaning device which more compact than the fluid distribution system known from prior art.

### SUMMARY OF THE INVENTION

The purposes of the present invention are, at least partly, achieved by a cleaning device configured to dispense two fluids said respectively, first fluid and second fluid, the cleaning device comprising, alternatively disposed along a main direction of a face said spraying face, series of first outlets and seconds outlets, each series of first outlets comprising first outlets, advantageously aligned along the main direction, the first outlets of a series of first outlets comprising main first outlets configured to spray the first fluid along a spraying direction perpendicular to the main direction and two lateral first outlets configured to spray the first fluid along, respectively, a first lateral direction and a second lateral direction, diverging from each other in a plane formed by the spraying direction and the main direction.

According to one embodiment, the cleaning device comprises a first inlet, and first channels, the first channels fluidically connecting the first inlet to the first outlets, advantageously, the first channels are dimensioned to insure so that the first fluid flow is essentially the same at each of the first outlets among all the series of first outlets.

According to one embodiment, the second outlets are arranged in two sets of second outlets said, respectively, even set of second outlets and odd set of second outlets, each set of second outlets being configured to spray the second fluid independently from the other set of second outlets.

According to one embodiment, the cleaning device comprises two second inlets said, respectively, even second inlet and odd second inlet, the cleaning device also comprises two sets of second channels said, respectively, even set of second channels and odd set of second channels, the even set of second channels comprising even second distribution channels and the even set of second channels fluidically connecting the even second inlet to the even set of second outlets while the odd set of second channels fluidically connecting the odd second inlet to the odd set of second outlets advantageously, the even set of second channels is dimensioned to insure so that the second fluid flow is essentially the same at each of the second outlets of the even set of second outlets and the odd set of second channels is dimensioned to insure so that the second fluid flow is essentially the same at each of the second outlets of the odd set of second outlets.

According to one embodiment, said cleaning device comprises a stacking of at least two plates, the stacking comprising two main faces opposite to each other.

According to one embodiment, the stacking of at least two plates comprises a plastic material.

According to one embodiment, the plates are assembled so that the interface between two plates is hermetically sealed.

According to one embodiment, the at least two plates comprise, from one main face said first face to the other main face said second face, a first plate, a second plate and a third plate, the stacking comprising a first interface between the first plate and the second plate, and a second interface between the second plate and the third plate.

According to one embodiment, the even set of second channels comprise even second distribution channels and an even second distribution line, the odd set of second channels comprise odd second distribution channels and an odd second distribution line.

According to one embodiment, the even second distribution line and the odd second distribution line are formed on one of the first interface and the second interface, while the even second distribution channels and the odd second distribution channels are formed on the other of the first interface and the second interface.

According to one embodiment, even second through holes are formed on the second plate to fluidically connect the even second distribution channels with the even second distribution line, and odd second through holes are formed in the second plate to fluidically connect the odd second distribution channels with the odd second distribution line.

According to one embodiment, the first channels comprise first distribution channels and a first distribution line, the first distribution line is formed on one of the first interface and the second interface, while the first distribution channels are formed on the other of the first interface and the second interface.

According to one embodiment, the first channels comprise first distribution channels and a first distribution line, the first distribution line and the first distribution channels are formed either on the first interface or on the second interface.

According to one embodiment, first through holes are formed on the second plate to fluidically connect the first distribution channels with the first distribution line.

According to one embodiment, the two second inlets and the first inlet are formed on one or the other of the first face and the second face.

According to one embodiment, the second plate comprises at least one passage fluidically connecting at least one of the two second inlets and the first inlet respectively, to the second channels and the first channels.

According to one embodiment, the stack of three plate has a thickness less than 15 mm, advantageously less than 10 mm, a length less than 200 mm, advantageously less than 180 mm, and a width less than 80 mm, advantageously less than 65 mm.

According to one embodiment, the first outlets within each series of first outlets are arranged in a periodic manner along the main direction.

According to one embodiment, the second outlets are arranged in a periodic manner along the main direction.

The invention also concerns a fluid delivery assembly comprising:
- at least one cleaning device according to the present invention;
- a first fluid source;
- a second fluid source.

The invention also concerns an automotive vehicle comprising at least one sensor, said sensor having an exposed surface said sensitive surface, the automotive vehicle being provided with at least one fluid delivery assembly according to the present invention, wherein the at least one delivery assembly being arranged for cleaning and drying the sensitive surface.

### DESCRIPTION OF THE DRAWINGS

Other features and advantages will be better understood after reading the following description of the cleaning device for the cleaning of surface sensor of a vehicle according to the invention, provided as non-limiting examples only, with reference to the accompanying drawings in which:
[Fig.1] Figure 1 is a schematic illustration in perspective of the cleaning device according to the present invention;
[Fig.2] Figure 2 is an exploded perspective view of the cleaning device of figure 1;
[Fig.3] Figure 3 is a schematic perspective view of cleaning device according to the present invention;
[Fig.4] Figure 4 is a schematic view of a series of first outlets of the cleaning device according to the present invention;
[Fig.5] Figure 5 represents a cross section of a series of first outlets according to the present invention;
[Fig.6] figure 6 illustrates the spraying of a first fluid on a surface S with a cleaning device for which the series of first outlets do not fulfill the condition imposed by the present invention;
[Fig.7] figure 7 illustrates the spraying of a first fluid on a surface S with a cleaning device according to the present invention;
[Fig.8] figure 8 is a perspective view of a first plate of the cleaning device of figure 1 in a perspective view;
[Fig.9] figure 9 is a perspective view of a second plate of the cleaning device of figure 1 in a perspective view, and showing the odd and even second distribution lines;
[Fig.10] figure 10 is a perspective view of a second plate of the cleaning device of figure 1 in a perspective view, and showing the odd and even second distribution channels;
[Fig.11] figure 11 is a perspective view of a third plate of the cleaning device of figure 1 in a perspective view, and showing the odd and even second distribution channels.

### DETAILLED DESCRIPTION OF THE INVENTION

The present invention concerns a cleaning device configured to dispense two fluids said respectively, first fluid and second fluid, the cleaning device comprising, alternatively disposed along a main direction of a face said spraying face, series of first outlets and seconds outlets, each series of first outlets comprising first outlets, advantagously aligned along the main direction, the first outlets of a series of first outlets comprising main first outlets configured to spray the first fluid along a spraying direction perpendicular to the main direction and two lateral first outlets configured to spray the first fluid along, respectively, a first lateral direction and a second lateral direction, diverging from each other in a plane formed by the spraying direction and the main direction.

It is understood that each second outlet is disposed between two series of first outlets.

The cleaning device can dispense, independently and/or sequentially, two different types of fluids said, respectively, first fluid and second fluid. The first fluid may comprise a dry gas, for example dry air, while the second fluid may comprise a liquid for example water.

In this regard, the liquid may be sprayed onto a surface sensor to remove particles or dust, while the dry gas may be sprayed onto said surface sensor to remove the liquid droplets.

Taking into account the first lateral outlets as defined above, the entire surface of the sensor can be dried efficiently. Notably, the first lateral outlets reduce the effect of the gap between two adjacent series of first outlets.

The cleaning device according to the present invention represents an efficient solution for the cleaning of sensor devices, and in particular for the cleaning of the sensor devices of automotive vehicles.

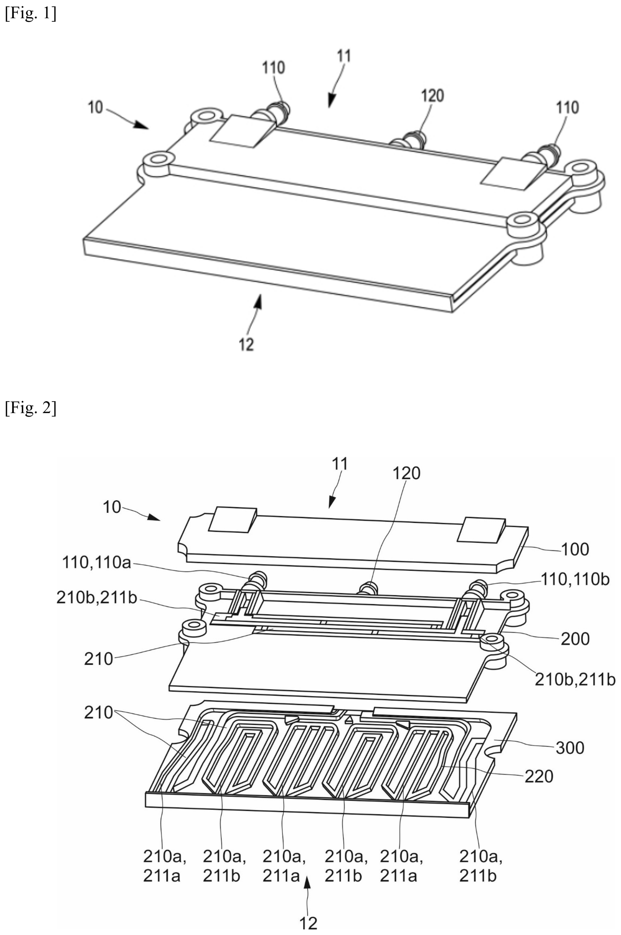

Figure 1 is a schematic illustration of the cleaning device 10 according to a non-limiting example of the present invention.

The cleaning device 10 is notably configured to deliver two fluids said, respectively, first fluid and second fluid.

For example, the first fluid may comprise a liquid while the second fluid may comprise a dry gas, for example dry air. Notably, the cleaning device may be coupled with a first pressure tank and a second pressure tank that are configured to continuously supply to said cleaning device, respectively, the first fluid and the second fluid. Each of the tanks can deliver a fluid under pressure, and notably up to 8 bars.

The cleaning device 10, as represented in figure 1, may have a flat shape, and may comprise two main faces (opposite to each other) said, respectively, first face 11 and second face 12. More particularly, the cleaning device 10 can comprise a stacking of at least two plates comprising for example a plastic material.

Advantageously, the plates can be assembled so that the interface between two plates is hermetically sealed.

More particularly, and as shown in figure 2 which is an exploded view of the cleaning device of figure 1, said cleaning device 10 can comprises a stack of three plates, said, respectively, from the first face 11 towards the second face 12, first plate 100, second plate 200 and third plate 300. The stacking can comprise a first interface between the first plate and the second plate, and a second interface between the second plate and the third plate.

It is understood, according to the present invention, that a plate has a generally flat shape and comprises two main faces joined by an edge.

Furthermore, the stack of three plates may have a thickness less than 15 mm, advantageously less than 10 mm, a length less than 200 mm, advantageously less than 180 mm, and a width less than 80 mm, advantageously less than 65 mm.

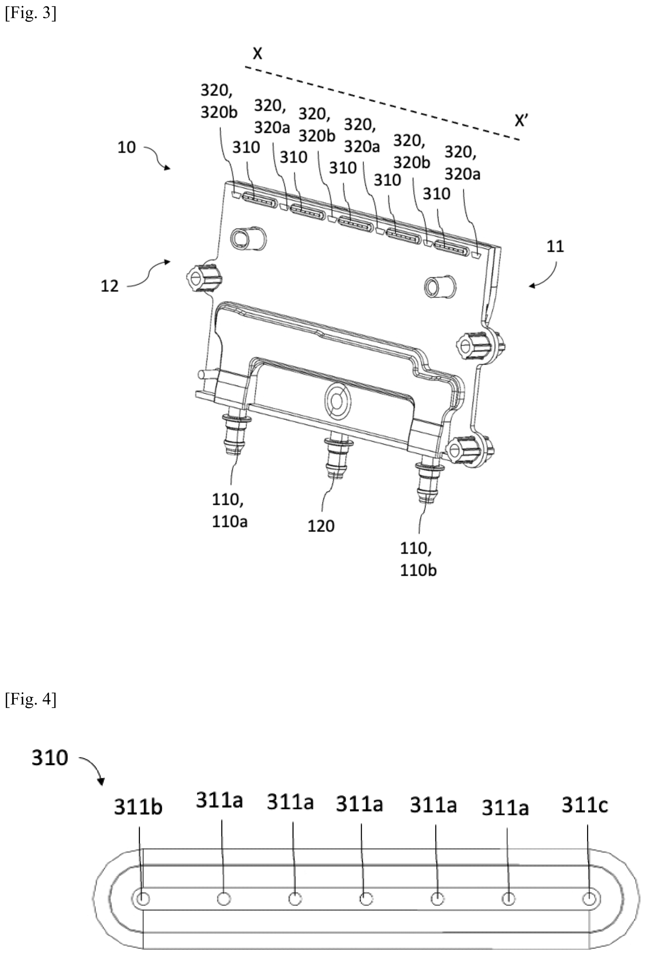

The cleaning device 10 comprises, alternatively disposed along a main direction XX' of a face said spraying face, series of first outlets 310 and seconds outlets 320 (figure 3). It is understood that the spraying face can be any face or contour of the stack of plates.

Each series of first outlets 310 comprises first outlets, advantageously aligned along the main direction XX' (figure 3, figure 4, figure 5). The first outlets of a series of first outlets 310 comprises main first outlets 311a configured to spray the first fluid along a spraying direction perpendicular to the main direction XX' and two lateral first outlets 311b, 311c configured to spray the first fluid along, respectively, a first lateral direction and a second lateral direction, diverging from each other in a plane formed by the spraying direction and the main direction XX'.

Each second outlet 320 is disposed between two adjacent series of first outlet 310. In other words, the series of first outlets 310 and the second outlets 320 are alternatively disposed along the main direction.

The first outlets within each series of first outlets 310 can be arranged in a periodic manner along the main direction XX'.

The second outlets 320 can be arranged in a periodic manner along the main direction XX'.

The first outlet 311 can have a circular shape, and the second outlets 320 can have a circular shape or an elongated shape.

This configuration allows the first fluid to be sprayed over the entire surface without dead zones, particularly in the areas between the first series of outlets. This aspect is particularly advantageous when it comes to drying a surface with a first fluid comprising a dry gas (e.g. dry air).

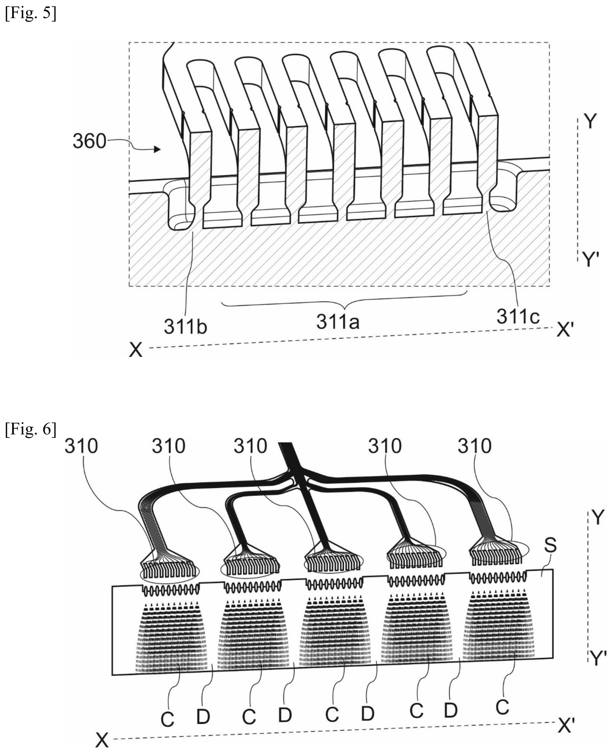

In this respect, figure 6 illustrates the spraying of a first fluid onto a surface S using a cleaning device for which the series of first outlets do not fulfill the condition imposed by the present invention. Notably, the lateral first outlets and the main first outlet are configured to spray the first fluid along the spraying direction. Clear areas C separated by dark areas D are clearly visible on the surface S. Clear areas C and dark areas D correspond to areas, respectively, reached and not reached by the first fluid. In other words, dark areas D are dead zones that could not be dried efficiently.

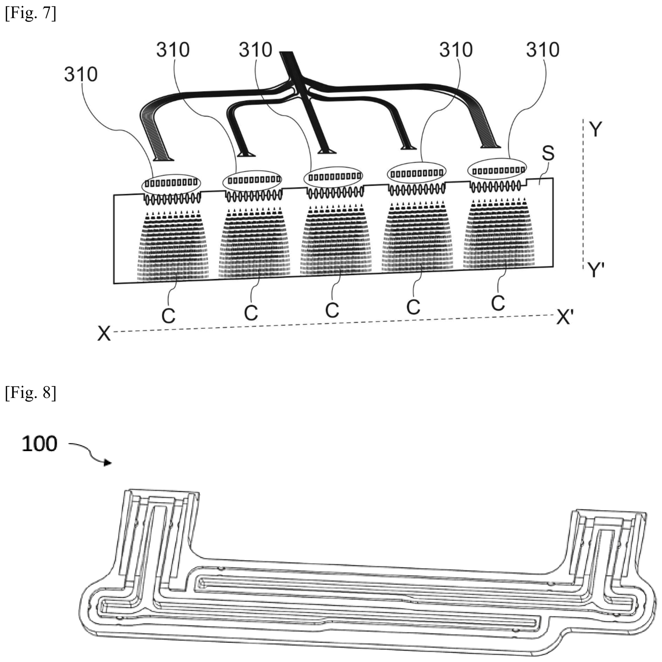

The figure 7 illustrates the spraying of a first fluid onto the surface S using a cleaning device according to the present invention. in this figure 7, the dark areas D have almost disappeared, indicating more efficient drying when the lateral first outlets 311b, 311c are considered.

During use, the second outlets 320 can spray a second fluid, such as water, onto the surface for cleaning, while the series of first outlets spray a first fluid, such dry air, onto the surface for drying.

As illustrated in figure 2, the cleaning device comprises a first inlet 120, and first channels 220, the first channels 220 fluidically connecting the first inlet 120 to the series of first outlets 310. Advantageously, the first channels 220 are dimensioned to ensure that the first fluid flow is essentially the same at each of the first outlets among all the series of first outlets. This later aspect can be achieved by adjusting the length and/or to cross-section of the first channels.

According to an advantageous embodiment, the first channels 220 can comprise first distribution channels 220b and a first distribution line 220a, the first distribution line is formed on one of the first interface and the second interface, while the first distribution channels are formed on the other of the first interface and the second interface. First through holes can be formed on the second plate to fluidically connect the first distribution channels with the first distribution line.

In a specific embodiment, the first distribution line can be molded on one of the first plate and the second plate at the first interface, while the first distribution channels can be molded on one of the second plate and the third plate at the second interface.

The second outlets 320 can be arranged in two sets of second outlets said, respectively, even set of second outlets 320a and odd set of second outlets 320b, each set of second outlets being configured to spray the second fluid independently from the other set of second outlets. Advantageously, second outlets of the even set of second outlets 320a and second outlets of the odd set of second outlets 320b are alternatively disposed along the main direction XX'.

Advantageously, the cleaning device can comprise two second inlets said, respectively, even second inlet 110a and odd second inlet 110b, the cleaning device can also comprise two sets of second channels said, respectively, even set of second channels 210 and odd set of second channels 211, the even set of second channels fluidically connecting the even second inlet 110a to the even set of second outlets 320a while the odd set of second channels fluidically connecting the odd second inlet 110b to the odd set of second outlets 320b.

The even set of second channels is dimensioned to insure so that the second fluid flow is essentially the same at each of the second outlets of the even set of second outlets and the odd set of second channels is dimensioned to insure so that the second fluid flow is essentially the same at each of the second outlets of the odd set of second outlets.

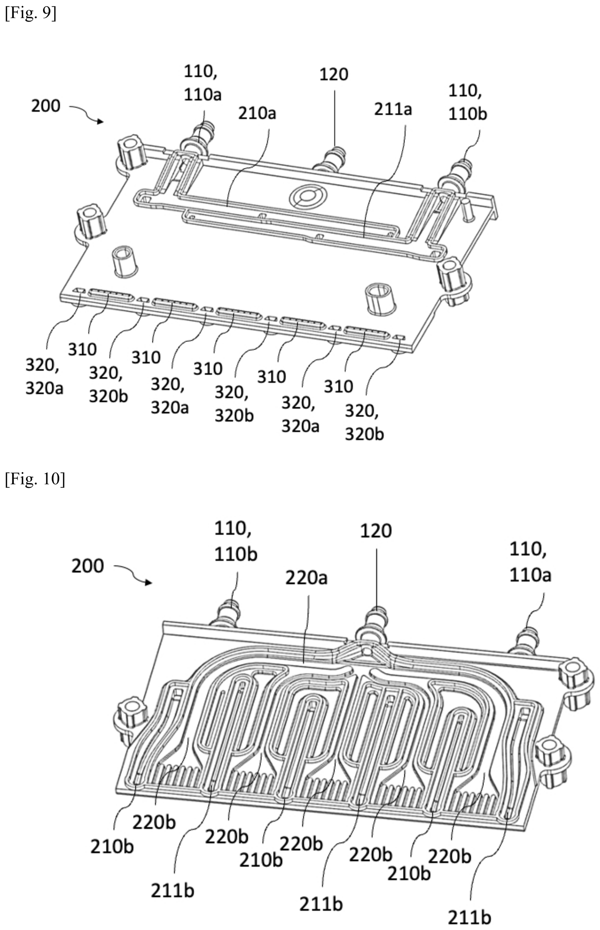

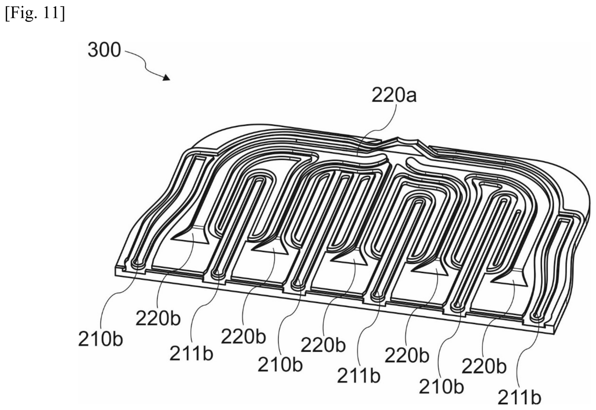

As an example, the even set of second channels can comprise even second distribution channels 210a and an even second distribution line 210b, and the odd set of second channels can comprise an odd second distribution channels 211a and an odd second distribution line 211b (figure 9, figure 10 and figure 11).

As an example, the even second distribution line 210b and the odd second distribution line 211b are formed on one of the first interface and the second interface, while the even second distribution channels 210a and the odd second distribution channels 211a are formed on the other of the first interface and the second interface.

The even second distribution line 210b and the odd second distribution line 211b can be molded on a face of one and/or the other of the first plate and the second plate forming the first interface, and while the even second distribution channels 210a and the odd second distribution channels 211a can be molded on a face of one and/or the other of the second plate and the third plate forming the second interface.

Even second through holes can be formed on the second plate to fluidically connect the even second distribution channels with the even second distribution line, and odd second through holes can be formed in the second plate to fluidically connect the odd second distribution channels with the odd second distribution line.

Whatever the considered embodiment, the two second inlets and the first inlet are formed on one or the other of the first face and the second face. Alternatively, the two second inlets and the first inlet can be formed on a contour joining the first face and the second face.

The second plate can comprise at least one passage fluidically connecting at least one of the two second inlets and the first inlet respectively, to the second channels and the first channels.

The invention also concerns a fluid delivery assembly comprising:
- the cleaning device according to the present invention;
- a gas source connected to the first inlet;
- a liquid source connected to the at least one second inlet;
- valves arranged for selectively feed the at least one second inlet with the liquid of the liquid source and the first inlet with the gas of the gas source.

The invention also concerns an automotive vehicle comprising at least one sensor, said sensor having an exposed surface said sensitive surface, the automotive vehicle being provided with at least one fluid delivery assembly according to the present invention, wherein the at least one delivery assembly being arranged for cleaning and drying the sensitive surface.

## Claims

1. A cleaning device (10) configured to dispense two fluids said respectively, first fluid and second fluid, the cleaning device (10) comprising, alternatively disposed along a main direction of a face said spraying face, series of first outlets (310) and seconds outlets (320), each series of first outlets (310) comprising first outlets (311), advantageously aligned along the main direction, the first outlets (311) of a series of first outlets (310) comprising main first outlets (311a) configured to spray the first fluid along a spraying direction perpendicular to the main direction and two lateral first outlets (311b, 311c) configured to spray the first fluid along, respectively, a first lateral direction and a second lateral direction, diverging from each other in a plane formed by the spraying direction and the main direction.

2. The cleaning device (10) according to claim 1, wherein the cleaning device (10) comprises a first inlet (120), and first channels (220), the first channels (220) fluidically connecting the first inlet (120) to the first outlets, advantageously, the first channels (220) are dimensioned to insure so that the first fluid flow is essentially the same at each of the first outlets among all the series of first outlets (310).

3. The cleaning device (10) according to claim 1 or 2, wherein the second outlets (320) are arranged in two sets of second outlets (320) said, respectively, even set of second outlets (320a) and odd set of second outlets (320b), each set of second outlets (320) being configured to spray the second fluid independently from the other set of second outlets (320).

4. The cleaning device (10) according to claim 3, wherein the cleaning device (10) comprises two second inlets said, respectively, even second inlet (110a) and odd second inlet (110b), the cleaning device (10) also comprises two sets of second channels said, respectively, even set of second channels (210) and odd set of second channels (211), the even set of second channels (210) fluidically connecting the even second inlet (110a) to the even set of second outlets (320a) while the odd set of second channels (211) fluidically connecting the odd second inlet (110b) to the odd set of second outlets (320b) advantageously, the even set of second channels (210) is dimensioned to insure so that the second fluid flow is essentially the same at each of the second outlets of the even set of second outlets (320a) and the odd set of second channels (211) is dimensioned to insure so that the second fluid flow is essentially the same at each of the second outlets of the odd set of second outlets (320b).

5. The cleaning device (10) according to any one of claims 1 to 4, wherein said cleaning device (10) comprises a stacking of at least two plates, the stacking comprising two main faces opposite to each other the stacking of at least two plates comprises a plastic material.

6. the cleaning device (10) according to claims 5, wherein the plates are assembled so that the interface between two plates is hermetically sealed.

7. The cleaning device (10) according the any one of claims 5 to 7, wherein the at least two plates comprise, from one main face said first face (11) to the other main face said second face (12), a first plate (100), a second plate (200) and a third plate (300), the stacking comprising a first interface between the first plate (100) and the second plate (200), and a second interface between the second plate (200) and the third plate (300).

8. The cleaning device (10) according to claim 7 in combination with claims 2 and 4, wherein the even set of second channels (210) comprise an even second distribution channels (210a) and an even second distribution line (210b), the odd set of second channels (211) comprise an odd second distribution channels (211a) and an odd second distribution line (211b).
the even second distribution line (210b) and the odd second distribution line (211b) are formed on one of the first interface and the second interface, while the even second distribution channels (210a) and the odd second distribution channels (211a) are formed on the other of the first interface and the second interface.

9. The cleaning device (10) according to claim 8, wherein even second through holes are formed on the second plate (200) to fluidically connect the even second distribution channels (210a) with the even second distribution line (210b), and odd second through holes are formed in the second plate (200) to fluidically connect the odd second distribution channels (211a) with the odd second distribution line (211b).

10. The cleaning device (10) according to any one of claims 8 to 9, wherein the first channels (220) comprise first distribution channels (220b) and a first distribution line (220a), the first distribution line (220a) is formed on one of the first interface and the second interface, while the first distribution channels (220b) are formed on the other of the first interface and the second interface first through holes are formed on the second plate (200) to fluidically connect the first distribution channels (220b) with the first distribution line (220a).

11. The cleaning device (10) according to any one of claims 8 to 9, wherein the first channels (220) comprise first distribution channels (220b) and a first distribution line (220a), the first distribution line (220a) and the first distribution channels (220b) are formed either on the first interface or on the second interface.

12. The cleaning device (10) according to any one of claims 8 to 11, wherein the two second inlets and the first inlet (120) are formed on one or the other of the first face (11) and the second face (12).

13. The cleaning device (10) according to any of claim 1 to 12 in combination with claim 8, wherein the stack of three plate has a thickness less than 15 mm, advantageously less than 10 mm, a length less than 200 mm, advantageously less than 180 mm, and a width less than 80 mm, advantageously less than 65 mm.

14. A fluid delivery assembly comprising:
- at least one cleaning device (10) according to any one of claim 1 to 13;
- a first fluid source;
- a second fluid source.

15. An automotive vehicle comprising at least one sensor, said sensor having an exposed surface said sensitive surface, the automotive vehicle being provided with at least one fluid delivery assembly according to claim 14, wherein the at least one delivery assembly being arranged for cleaning and drying the sensitive surface.
